# EUROPÄISCHE PATENTSCHRIFT

(11) **EP 3 167 199 B1**
(45) Veröffentlichungstag und Bekanntmachung des Hinweises auf die Patenterteilung: **11.03.2020**
(21) Anmeldenummer: 15748182.1
(22) Anmeldetag: 02.07.2015
(51) Int. Cl.: F16B 12/20

(54) **VERBINDUNGSMITTEL UND VERFAHREN ZUM FESTLEGEN EINES VERBINDUNGSELEMENTS AN ODER IN EINEM BAUTEIL**
CONNECTING MEANS AND METHOD FOR FIXING A CONNECTING ELEMENT TO OR IN A COMPONENT
MOYEN D'ASSEMBLAGE ET PROCÉDÉ DE FIXATION D'UN ÉLÉMENT D'ASSEMBLAGE SUR OU DANS UNE PIÈCE STRUCTURALE

(30) Priorität: 08.07.2014 DE 102014109547
(43) Veröffentlichungstag der Anmeldung: 17.05.2017
(73) Patentinhaber: Lamello AG, 4416 Bubendorf (CH)
(72) Erfinder: JEKER, Patrick, CH-4225 Brislach (CH); SEILER, Philipp, CH-4424 Arboldswil (CH)
(74) Vertreter: Hoeger, Stellrecht & Partner Patentanwälte mbB
(86) Internationale Anmeldenummer: PCT/EP2015/065156
(87) Internationale Veröffentlichungsnummer: WO 2016/005274

(56) Entgegenhaltungen:
- DE-U1- 29 511 111

## Beschreibung

Die vorliegende Erfindung betrifft ein Verbindungsmittel zum Festlegen und/oder Verbinden von Gegenständen oder Bauteilen, insbesondere zum Verbinden von Möbel- oder Maschinenteilen.

Derartige Verbindungsmittel sind beispielsweise aus der EP 1 990 549 A1 und der DE 295 11 111 U1 bekannt.

Der vorliegenden Erfindung liegt die Aufgabe zugrunde, ein Verbindungsmittel zum Festlegen und/oder Verbinden von Gegenständen oder Bauteilen bereitzustellen, welches ein oder mehrere Verbindungselemente umfasst, die einfach und zuverlässig in oder an einem oder mehreren Bauteilen festlegbar sind.

Diese Aufgabe wird erfindungsgemäß durch ein Verbindungsmittel gemäß Anspruch 1 gelöst.

Dadurch, dass das erfindungsgemäße Verbindungsmittel ein oder mehrere Sicherungselemente umfasst, welche zunächst einstückig mit dem Grundkörper ausgebildet sind und zum Festlegen des Grundkörpers in oder an einem Bauteil von dem Grundkörper lösbar und in eine Sicherungsstellung bringbar sind, ist eine einfache und praktische Handhabung des Verbindungsmittels einerseits und eine zuverlässige und sichere Festlegung desselben in oder an einem oder mehreren Bauteilen möglich.

Unter einem Festlegen und/oder einer Verbindung zweier Bauteile ist in dieser Beschreibung und den beigefügten Ansprüchen vorzugsweise jede Art von fixierender oder beweglicher Festlegung der Bauteile relativ zueinander zu verstehen, einschließlich der ortsfesten Fixierung der Bauteile relativ zueinander und einschließlich der Verbindung der Bauteile miteinander zur Ermöglichung einer vorgegebenen Relativbewegung der Bauteile relativ zueinander.

Unter einem Festlegen und/oder einer Verbindung von Gegenständen ist in dieser Beschreibung und den beigefügten Ansprüchen vorzugsweise eine Festlegung eines Verbindungselements an einem Bauteil zu verstehen, wobei das Verbindungselement vorzugsweise einen Gegenstand und/oder eine Aufnahme für einen Gegenstand umfasst. Mittels des Verbindungselements ist somit der Gegenstand an dem Bauteil festlegbar, insbesondere verankerbar.

Zur Verankerung eines Gegenstands an einem Bauteil kann somit vorgesehen sein, dass das Verbindungsmittel lediglich ein einziges Verbindungselement umfasst, welches beispielsweise an nur einem Bauteil festlegbar ist, um einen separaten Gegenstand an dem Bauteil festlegen, insbesondere verankern, zu können.

Der Gegenstand kann beispielsweise ein Kleidungsstück sein. Eine Aufnahme für den Gegenstand, welche vorzugsweise an einem Verbindungselement angeordnet und/oder ausgebildet ist, ist dann beispielsweise als ein Kleiderhaken ausgebildet.

Alternativ oder ergänzend hierzu kann vorgesehen sein, dass der Gegenstand ein Beleuchtungskörper, insbesondere ein Leuchtmittel, ist. Ein solcher Beleuchtungskörper kann dann insbesondere in ein Verbindungselement integriert oder an demselben anordenbar sein.

Ferner kann vorgesehen sein, dass ein Gegenstand zusätzliche Funktionen, insbesondere von einer reinen Verbindungsfunktion unabhängige Funktionen, umfasst und mittels mindestens eines Verbindungselements an einem Bauteil festlegbar, insbesondere verankerbar, ist.

Unter einem Verbindungszustand oder einem verbundenen Zustand ist in dieser Beschreibung und den beigefügten Ansprüchen vorzugsweise ein Zustand des Verbindungsmittels zu verstehen, in welchem ein oder mehrere Verbindungselemente in oder an einem oder mehreren Bauteilen festgelegt und/oder miteinander verbunden sind.

Bei der Verwendung von nur einem Verbindungselement ist ein verbundener Zustand vorzugsweise der Zustand, in welchem das Verbindungselement in oder an einem Bauteil festgelegt, insbesondere verankert, ist.

Bei einer Verbindung zweier Bauteile miteinander ist ein verbundener Zustand vorzugsweise der Zustand, in welchem die Bauteile mittels des Verbindungsmittels fest miteinander verbunden oder zur Relativbewegung derselben bewegbar aneinander angeordnet sind.

Bei einer Ausgestaltung der Erfindung kann vorgesehen sein, dass das mindestens eine Verbindungselement ein oder mehrere als Sicherungsstift oder Sicherungsbolzen ausgebildete Sicherungselemente umfasst.

Ein Sicherungselement kann beispielsweise im Wesentlichen zylinderförmig, insbesondere kreiszylinderförmig, ausgebildet sein.

Es kann vorgesehen sein, dass ein Verbindungselement bezüglich einer Sicherungsrichtung, Bewegungsrichtung oder Betätigungsrichtung vorne ein spitz zulaufendes Ende aufweist.

Ein bezüglich einer Sicherungsrichtung, Bewegungsrichtung oder Betätigungsrichtung hinten angeordnetes Ende ist beispielsweise flach ausgebildet oder mit einer Vertiefung versehen. Auf diese Weise kann das Verbindungselement besonders einfach und zuverlässig betätigt werden. Beispielsweise kann ein Betätigungselement zum Betätigen des Sicherungselements einfach an dem Sicherungselement angreifen.

Vorteilhaft kann es sein, wenn ein Verbindungselement massiv ausgebildet ist.

Insbesondere kann vorgesehen sein, dass ein Verbindungselement als ein massives Kunststoffelement ausgebildet ist.

Sämtliche vorstehend und auch nachfolgend gemachten Angaben betreffend die Ausgestaltung einzelner Elemente, Bauteile, Abschnitte oder sonstiger Bestandteile des Verbindungsmittels können bei einer Ausgestaltung der Erfindung beispielsweise nur auf ein einziges Element, ein einziges Bauteil, einen einzigen Abschnitt oder einen sonstigen einzelnen Bestandteil des Verbindungsmittels zutreffen. Es kann jedoch auch vorgesehen sein, dass zwei oder mehrere der jeweiligen Elemente, Bauteile, Abschnitte und/oder Bestandteile des Verbindungsmittels die genannten Merkmale und/oder Vorteile aufweisen.

Vorteilhaft kann es sein, wenn der Grundkörper einen Leitabschnitt umfasst, mittels welchem und/oder längs welchem das eine oder die mehreren Sicherungselemente aus der Ausgangsstellung in die Sicherungsstellung führbar oder leitbar sind.

Insbesondere kann vorgesehen sein, dass der Leitabschnitt durch ein oder mehrere Durchtrittsöffnungen in dem Grundkörper gebildet ist, innerhalb derer das eine oder die mehreren Sicherungselemente geführt oder geleitet sind. Eine oder mehrere Durchtrittsöffnungen weisen vorzugsweise eine Form auf, welche zumindest abschnittsweise einer äußeren Form des einen oder der mehreren Sicherungselemente entspricht.

Insbesondere kann vorgesehen sein, dass ein oder mehrere Durchtrittsöffnungen zumindest abschnittsweise komplementär zu zumindest einem Abschnitt des einen oder der mehreren Sicherungselemente ausgebildet sind.

Erfindungsgemäß ist vorgesehen, dass das eine oder die mehreren Sicherungselemente ragen in der Ausgangsstellung einerseits und in der Sicherungsstellung andererseits in voneinander verschiedenen Richtungen aus einer oder mehreren Durchtrittsöffnungen des Grundkörpers heraus.

Beispielsweise kann vorgesehen sein, dass das eine oder die mehreren Sicherungselemente in der Ausgangsstellung, insbesondere ausschließlich, an einem ersten Ende der einen oder der mehreren Durchtrittsöffnungen aus der jeweiligen Durchtrittsöffnung herausragen.

Alternativ oder ergänzend hierzu kann vorgesehen sein, dass das eine oder die mehreren Sicherungselemente in der Sicherungsstellung, insbesondere ausschließlich, an einem dem ersten Ende gegenüberliegenden zweiten Ende der einen oder der mehreren Durchtrittsöffnungen aus der jeweiligen Durchtrittsöffnung herausragen.

Durch ein Betätigen des einen oder der mehreren Sicherungselemente sind das eine oder die mehreren Sicherungselemente vorzugsweise derart bewegbar, dass ein vor dem Betätigen aus dem Grundkörper herausragender Abschnitt des jeweiligen Sicherungselements nach der Betätigung in dem Grundkörper angeordnet ist, während ein vor dem Betätigen in dem Grundkörper angeordneter Abschnitt des jeweiligen Sicherungselements nach dem Betätigen vorzugsweise aus dem Grundkörper herausragt.

Es kann vorgesehen sein, dass der Sollbruchbereich zwischen dem Grundkörper und dem einen oder den mehreren Sicherungselementen vertieft in dem Grundkörper angeordnet ist.

In dieser Beschreibung und den beigefügten Ansprüchen wird auf den Sollbruchbereich stets im Singular Bezug genommen. Unter einem Sollbruchbereich ist dabei jedoch nicht nur ein einziger zusammenhängender Bereich zu verstehen, sondern vielmehr sämtliche Bereiche oder Abschnitte zwischen dem Grundkörper und dem einen oder den mehreren Sicherungselementen, welche zum Lösen des einen oder der mehreren Sicherungselemente von dem Grundkörper zerstört werden.

Der Sollbruchbereich zwischen dem Grundkörper und dem einen oder den mehreren Sicherungselementen ist vorzugsweise beabstandet von beiden Enden der einen oder der mehreren Durchtrittsöffnungen in dem Grundkörper angeordnet.

Es kann vorgesehen sein, dass der Grundkörper und das eine oder die mehreren Sicherungselemente in der Ausgangsstellung des einen oder der mehreren Sicherungselemente als ein einstückig ausgebildetes Spritzgussbauteil ausgebildet sind.

Der Grundkörper umfasst vorzugsweise einen Anlageabschnitt, an welchen eine Betätigungsvorrichtung anlegbar ist, mittels welcher das eine oder die mehreren Sicherungselemente von der Ausgangsstellung in die Sicherungsstellung bringbar sind.

Vorzugsweise sind mittels der Betätigungsvorrichtung mehrere Sicherungselemente gleichzeitig und/oder durch eine einzige Betätigungsbewegung von der Ausgangsstellung in die Sicherungsstellung bringbar.

Die vorliegende Erfindung betrifft daher auch eine Kombination aus einem Verbindungsmittel und einer Betätigungsvorrichtung zum Betätigen des einen oder der mehreren Sicherungselemente.

Die Betätigungsvorrichtung umfasst vorzugsweise einen oder mehrere Anlageabschnitte, welche vorzugsweise im Wesentlichen komplementär zu einem oder mehreren Anlageabschnitten des Grundkörpers ausgebildet sind.

Vorteilhaft kann es sein, wenn der Anlageabschnitt des Grundkörpers eine oder mehrere ringförmige Vertiefungen umfasst.

Die eine oder die mehreren ringförmigen Vertiefungen sind vorzugsweise konzentrisch und/oder koaxial um das eine oder die mehreren Sicherungselemente angeordnet.

Insbesondere dann, wenn der Anlageabschnitt des Grundkörpers eine oder mehrere ringförmige Vertiefungen umfasst, umfasst die Betätigungsvorrichtung vorzugsweise einen oder mehrere ringförmige Vorsprünge, so dass die Betätigungsvorrichtung zur Betätigung des einen oder der mehreren Sicherungselemente einfach und zuverlässig an das Verbindungsmittel anlegbar ist.

Bei einer Ausgestaltung der Erfindung kann vorgesehen sein, dass der Grundkörper in einer Einschubrichtung in eine Nut einschiebbar ist, welche in oder an dem Bauteil vorgesehen ist.

Das eine oder die mehreren Sicherungselemente sind zur Festlegung derselben in der Sicherungsstellung vorzugsweise quer, insbesondere schräg oder senkrecht, zur Einschubrichtung bewegbar.

Der Grundkörper ist mittels des einen oder der mehreren Sicherungselemente bezüglich der Einschubrichtung vorzugsweise formschlüssig in der Nut festlegbar.

Vorteilhaft kann es sein, wenn der Grundkörper eine gekrümmte Anlagefläche umfasst, welche in einem Längsschnitt kreisbogenförmig ist.

Eine in einem Bauteil vorgesehene Nut weist vorzugsweise einen Nutgrund auf, welcher in einem Längsschnitt kreisbogenförmig ist. Der Grundkörper, welcher vorzugsweise eine gekrümmte Anlagefläche umfasst, die in einem Längsschnitt kreisbogenförmig ist, kann dann einfach in die Nut eingeführt werden und, insbesondere mittels der Anlagefläche, an dem Nutgrund abgleiten.

Unter einem Längsschnitt ist insbesondere ein Schnitt in einer Ebene zu verstehen, in welcher die, vorzugsweise gekrümmte, Einschubrichtung liegt.

Vorteilhaft kann es sein, wenn der Grundkörper einen oder mehrere nichtselbstschneidende Haltevorsprünge umfasst.

Der eine oder die mehreren nicht-selbstschneidenden Haltevorsprünge weisen vorzugsweise jeweils eine gekrümmte Abstützfläche auf, die in einem Längsschnitt kreisbogenförmig ist.

Der eine oder die mehreren Haltevorsprünge sind vorzugsweise in eine an dem Bauteil vorgesehene Nut mit einer gekrümmten Hinterschneidungsfläche, die in einem Längsschnitt kreisbogenförmig ist, einführbar.

Die Nut umfasst vorzugsweise einen Basisabschnitt und einen oder mehrere sich in einer Dickenrichtung von dem Basisabschnitt weg erstreckende Hinterschneidungsabschnitte.

Der eine oder die mehreren Haltevorsprünge greifen in einem Verbindungszustand vorzugsweise in den einen oder die mehreren Hinterschneidungsabschnitte der Nut ein.

Mittels des einen oder der mehreren nicht-selbstschneidenden Haltevorsprünge und der einen oder der mehreren gekrümmten Hinterschneidungsflächen ist vorzugsweise eine Verbindung zwischen dem Grundkörper und dem Bauteil derart herstellbar, dass der Grundkörper ausschließlich längs der gekrümmten Einschubrichtung bewegbar ist.

Vorteilhaft kann es sein, wenn der Grundkörper, insbesondere das gesamte Verbindungselement, im Wesentlichen vollständig in einer Nut des Bauteils anordenbar ist, so dass der Grundkörper, insbesondere das gesamte Verbindungselement, nicht über eine Kontaktfläche des Bauteils hinausragt.

Eine Kontaktfläche ist vorzugsweise diejenige Fläche des Bauteils, in welcher die Nut angeordnet ist, und in welcher beispielsweise ein weiteres Bauteil anlegbar ist, wenn das Verbindungsmittel zum Verbinden der beiden Bauteile dient.

Vorteilhaft kann es sein, wenn das Verbindungselement, insbesondere der Grundkörper des Verbindungselements, im Wesentlichen flächenbündig mit der Kontaktfläche abschließt.

Das Verbindungselement, insbesondere der Grundkörper, füllt eine in dem Bauteil angeordnete Nut vorzugsweise im Wesentlichen vollständig aus.

Unter einem im Wesentlichen vollständigen Ausfüllen ist dabei zu verstehen, dass ein Hohlraumvolumen der Nut mindestens ungefähr zu 80 %, beispielsweise mindestens ungefähr zu 90 %, insbesondere zu mindestens ungefähr 95 %, ausgefüllt ist.

Es kann vorgesehen sein, dass der Grundkörper einen Verbindungsabschnitt zum Verbinden des Verbindungselements mit einem weiteren Verbindungselement und/oder einem Gegenstand umfasst.

Der Verbindungsabschnitt umfasst beispielsweise ein oder mehrere Halteelemente, ein oder mehrere Federelemente und/oder sonstige Elemente zur Ermöglichung einer vorzugsweise lösbaren Verbindung zwischen dem Verbindungselement und einem weiteren Verbindungselement und/oder einem Gegenstand.

Die vorliegende Erfindung betrifft ferner ein Verfahren zum Festlegen eines Verbindungselements eines Verbindungsmittels an oder in einem Bauteil.

Der Erfindung liegt diesbezüglich die Aufgabe zugrunde, ein Verfahren bereitzustellen, mittels welchem ein Verbindungselement eines Verbindungsmittels einfach und zuverlässig in einem Bauteil festlegbar ist.

Diese Aufgabe wird erfindungsgemäß durch ein Verfahren gemäß Anspruch 12 gelöst.

Das erfindungsgemäße Verfahren weist vorzugsweise einzelne oder mehrere der im Zusammenhang mit dem erfindungsgemäßen Verbindungsmittel beschriebenen Merkmale und/oder Vorteile auf.

Günstig kann es sein, wenn der Grundkörper und das eine oder die mehreren Sicherungselemente des Verbindungselements einstückig miteinander in einem Spritzgussverfahren, insbesondere einem Kunststoff-Spritzgussverfahren, hergestellt werden.

Ferner kann vorgesehen sein, dass durch eine einzige Betätigung des einen oder der mehreren Sicherungselemente, insbesondere durch Aufbringen einer in einer Sicherungsrichtung oder Betätigungsrichtung gerichteten Betätigungskraft, der Sollbruchbereich zerstört und das eine oder die mehreren Sicherungselemente aus der Ausgangsstellung in die Sicherungsstellung bewegt werden.

Insbesondere zum Verbinden zweier Bauteile kann vorgesehen sein, dass ein erstes Verbindungselement des Verbindungsmittels in ein erstes Bauteil eingebracht wird. Ein zweites Verbindungselement des Verbindungsmittels wird vorzugsweise an oder in einem zweiten Bauteil angeordnet, insbesondere in das zweite Bauteile eingebracht. Anschließend werden die Bauteile vorzugsweise dadurch miteinander verbunden, dass die Verbindungselemente des Verbindungsmittels, insbesondere lösbar, aneinander festgelegt werden, beispielsweise durch Klemmen, Rasten, Schrauben, Klipsen, etc.

Das eine oder die mehreren Sicherungselemente können beispielsweise als Sicherungsstift, Sicherungsnagel und/oder Sicherungsbolzen ausgebildet sein.

Vorteilhaft kann es sein, wenn das Verbindungsmittel ein oder mehrere Zusatzstifte, Zusatznägel und/oder Zusatzbolzen umfasst, mittels welchen insbesondere auf das eine oder die mehreren Sicherungselemente einwirkbar ist.

Beispielsweise kann vorgesehen sein, dass das Verbindungsmittel ein oder mehrere Zusatzstifte, Zusatznägel und/oder Zusatzbolzen umfasst, mittels welchen das eine oder die mehreren Sicherungselemente in eine weitere von der Ausgangsstellung und der Sicherungsstellung verschiedene Stellung bringbar sind.

Vorteilhaft kann es sein, wenn das eine oder die mehreren Sicherungselemente mittels des einen oder der mehreren Zusatzstifte, Zusatznägel und/oder Zusatzbolzen weiter aus dem Grundkörper herausbewegt und in das Bauteil, in welchem beispielsweise die Nut angeordnet ist, hineingedrückt werden können.

Bei der Verwendung von einem oder mehreren Zusatzstiften, Zusatznägeln und/oder Zusatzbolzen ist vorzugsweise vorgesehen, dass ein bezüglich der Sicherungsrichtung, Bewegungsrichtung oder Betätigungsrichtung hinteres Ende des einen oder der mehreren Sicherungselemente stumpf oder abgeflacht ausgebildet ist, um vorzugsweise ein unerwünschtes Spalten des einen oder der mehreren Sicherungselemente beim Bewegen derselben mittels des einen oder der mehreren Zusatzstifte, Zusatznägel und/oder Zusatzbolzen zu verhindern.

Vorteilhaft kann es sein, wenn das Verbindungsmittel eine Führungsvorrichtung zur Führung zweier Bauteile relativ zueinander umfasst oder bildet, wobei ein Verbindungselement eine Führungsnut umfasst und/oder wobei ein (weiteres) Verbindungselement ein Führungselement umfasst.

Vorzugsweise ist das Führungselement zusammen mit dem zugehörigen Bauteil längs der Führungsnut relativ zu dem weiteren Bauteil bewegbar, insbesondere linear verschiebbar.

Die Führungsnut ist vorzugsweise im Wesentlichen linear ausgebildet.

Es kann vorgesehen sein, dass die Führungsnut einen Führungsabschnitt umfasst, an welchem das Führungselement die Führungsnut hintergreift.

Insbesondere kann vorgesehen sein, dass die Führungsnut einen Hintergreifabschnitt umfasst, an welchem das Führungselement angreifen kann.

Bei einer Ausgestaltung der Erfindung ist vorgesehen, dass die Führungsnut im Wesentlichen T-förmig ausgebildet ist.

Die Führungsnut umfasst beispielsweise eine Kulissenführung zur Führung des Führungselements längs eines vorgegebenen Führungswegs.

Der Führungsweg weist vorzugsweise längs der Führungsnut variierende Abstände von einer Kontaktfläche des Bauteils und/oder von einer Anlagefläche des Verbindungselements auf.

Es kann vorgesehen sein, dass der Führungsweg zwei Maximalbereiche mit zumindest lokal, insbesondere mit global, maximalem Abstand von einer Kontaktfläche des Bauteils und/oder von einer Anlagefläche des Verbindungselements aufweist.

Ferner kann vorgesehen sein, dass der Führungsweg einen Minimalbereich mit lokal oder global minimalem Abstand von einer Kontaktfläche des Bauteils und/oder von einer Anlagefläche des Verbindungselements aufweist.

Vorteilhaft kann es sein, wenn der Führungsweg einen zwischen den Maximalbereichen angeordneten Minimalbereich mit lokal minimalem Abstand von einer Kontaktfläche des Bauteils und/oder von einer Anlagefläche des Verbindungselements sowie an den Maximalbereich angrenzende und dem Minimalbereich abgewandt angeordnete Auslaufbereiche mit abnehmendem Abstand von einer Kontaktfläche des Bauteils und/oder von einer Anlagefläche des Verbindungselements aufweist.

Es kann vorgesehen sein, dass die Abstützfläche beidseitig an eine Kontaktfläche des Bauteils angrenzt. Die Kontaktfläche begrenzt dann vorzugsweise den kreisbogenförmigen Längsschnitt beidseitig.

Die Nut ist vorzugsweise kreissegmentförmig ausgebildet, wobei eine Begrenzung des Kreissegments eine kreisbogenförmige Nutgrundfläche und eine weitere Begrenzung des Kreissegments die Kontaktfläche ist.

Es kann jedoch auch vorgesehen sein, dass die Nut als eine Teilnut ausgebildet ist.

Die Abstützfläche grenzt beispielsweise nur einseitig an eine Kontaktfläche des Bauteils an. Eine der Kontaktfläche abgewandte Seite der Abstützfläche endet dann vorzugsweise an einer von der Kontaktfläche verschiedenen Fläche des Bauteils oder innerhalb des Bauteils.

Unter einer Seite einer Abstützfläche ist in dieser Beschreibung und den beigefügten Ansprüchen insbesondere ein die Abstützfläche längs des kreisbogenförmigen Längsschnitts begrenzendes Ende zu verstehen.

Weitere bevorzugte Merkmale und/oder Vorteile der vorliegenden Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung zweier Bauteile, welche mittels eines Verbindungsmittels miteinander verbindbar sind und hierzu zwei Nuten mit Hinterschneidungsabschnitten umfassen;
- Fig. 2: eine teiltransparente Darstellung der Bauteile aus Fig. 1;
- Fig. 3: einen schematischen Querschnitt durch eines der Bauteile aus Fig. 1;
- Fig. 4: eine schematische teiltransparente Seitenansicht des Bauteils aus Fig. 3;
- Fig. 5: einen schematischen Längsschnitt durch eine erste Ausführungsform eines Verbindungsmittels, welches zwei Verbindungselemente umfasst, wobei die Verbindungselemente an voneinander getrennten Bauteilen angeordnet sind;
- Fig. 6: eine teilweise geschnittene schematische perspektivische Darstellung des Verbindungsmittels und der Bauteile aus Fig. 5;
- Fig. 7: eine der Fig. 5 entsprechende schematische Darstellung des Verbindungsmittels und der Bauteile, wobei die Bauteile mittels des Verbindungsmittels miteinander verunden sind;
- Fig. 8: eine vergrößerte Darstellung des Bereichs VIII in Fig. 7;
- Fig. 9: einen schematischen Querschnitt durch das Verbindungsmittel aus Fig. 5 im verbundenen Zustand der Verbindungselemente;
- Fig. 10: eine schematische teiltransparente Seitenansicht einer zweiten Ausführungsform eines Verbindungsmittels und eines Bauteils, in welchem das Verbindungsmittel angeordnet ist;
- Fig. 11: einen schematischen Querschnitt durch das Verbindungsmittel und das Bauteil aus Fig. 10;
- Fig. 12: eine schematische Draufsicht von oben auf das Verbindungsmittel und das Bauteil aus Fig. 10;
- Fig. 13: eine schematische perspektivische Darstellung des Verbindungsmittels und des Bauteils aus Fig. 10;
- Fig. 14: einen schematischen Längsschnitt durch das Verbindungsmittel und das Bauteil aus Fig. 10 längs der Linie 14-14 in Fig. 12;
- Fig. 15: eine vergrößerte Darstellung des Bereichs XV in Fig. 14;
- Fig. 16: eine der Fig. 10 entsprechende Darstellung der zweiten Ausführungsform des Verbindungsmittels und des Bauteils, wobei Sicherungselemente des Verbindungsmittels in einer Sicherungsstellung angeordnet sind;
- Fig. 17: eine der Fig. 11 entsprechende schematische Darstellung des Verbindungsmittels und des Bauteils aus Fig. 16; und
- Fig. 18: eine der Fig. 14 entsprechende schematische Darstellung des Verbindungsmittels und des Bauteils aus Fig. 16.

Gleiche oder funktional äquivalente Elemente sind in sämtlichen Figuren mit denselben Bezugszeichen versehen.

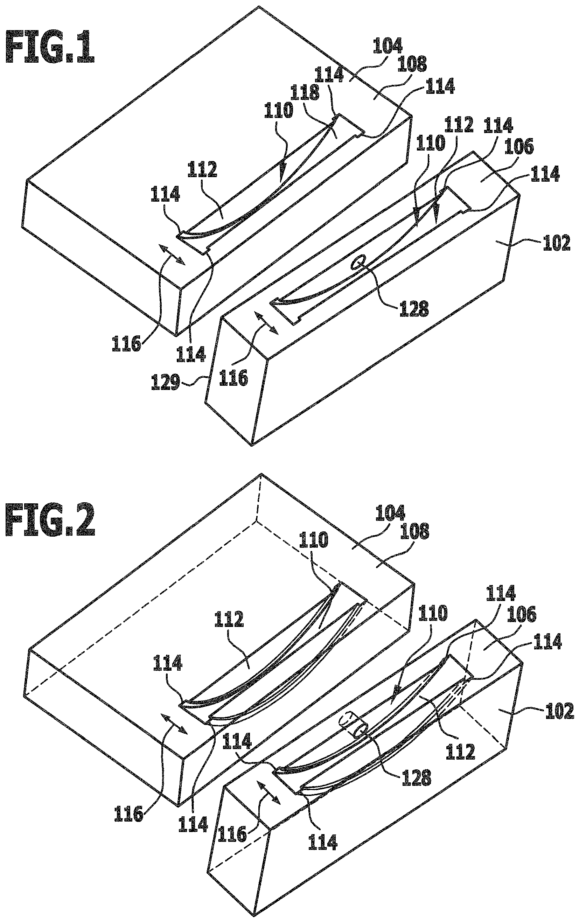

Ein als Ganzes mit 100 bezeichnetes Verbindungsmittel dient beispielsweise der Verbindung eines ersten, im Wesentlichen plattenförmigen Bauteils 102 mit einem zweiten, ebenfalls im Wesentlichen plattenförmigen Bauteil 104 (siehe Fig. 1 bis 4).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

Im verbundenen Zustand der beiden Bauteile 102 und 104 liegt eine eine Schmalseite des ersten Bauteils 102 bildende Kontaktfläche 106 des ersten Bauteils 102 an einer eine Hauptfläche des zweiten Bauteils 104 bildenden Kontaktfläche 108 des zweiten Bauteils 104 an.

An jede der Kontaktflächen 106, 108 mündet jeweils eine in dem betreffenden Bauteil 102 bzw. 104 ausgebildete Nut 110, welche einen kreiszylindersegment- oder kreiszylinderabschnittsförmigen Basisabschnitt 112 und zwei sich in einer Dickenrichtung 116 von dem Basisabschnitt 112 weg erstreckende Hinterschneidungsabschnitte 114 umfasst.

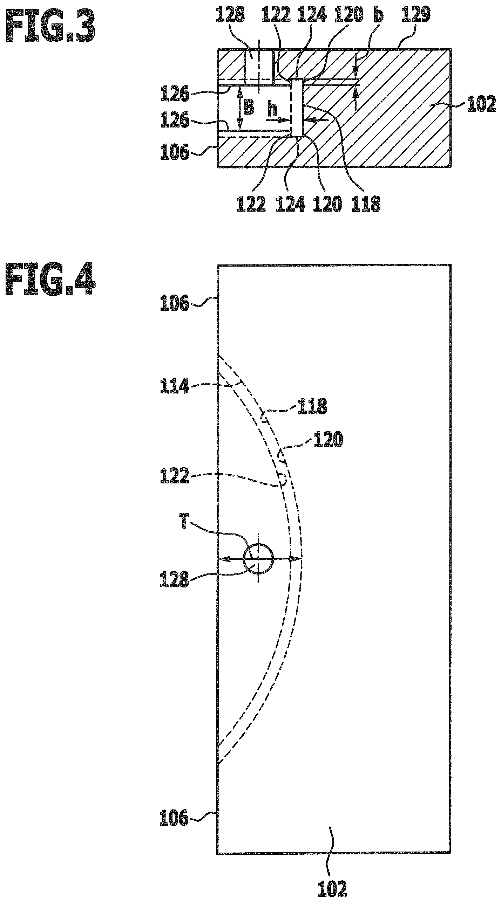

Der Krümmungsradius des Basisabschnitts 112 ist größer als die Nuttiefe T (siehe Fig. 4), so dass die gewölbte Nutgrundfläche 118 die jeweilige Kontaktfläche 106, 108 unter einem spitzen Winkel schneidet.

Der Basisabschnitt 112 der Nut 110 weist in der Dickenrichtung 116 eine Breite B von beispielsweise ungefähr 8 mm auf.

Jeder der Hinterschneidungsabschnitte 114 der Nut 110 wird auf seiner der jeweiligen Kontaktfläche 106 bzw. 108 abgewandten Seite durch eine mit der Nutgrundfläche 118 flächenbündige Grundfläche 120 begrenzt, welche kreiszylindermantelausschnittsförmig ausgebildet ist und denselben Krümmungsradius wie die Nutgrundfläche 118 des Basisabschnitts 112 aufweist.

In der Richtung auf die Kontaktfläche 106 bzw. 108 hin wird jeder Hinterschneidungsabschnitt 114 durch eine ebenfalls kreiszylindermantelausschnittsförmige Hinterschneidungsfläche 122 begrenzt, welche konzentrisch zu der Grundfläche 120 ausgebildet ist und einen kleineren Krümmungsradius aufweist.

Seitlich wird jeder der Hinterschneidungsabschnitte 114 durch eine senkrecht zur jeweiligen Kontaktfläche 106 bzw. 108 verlaufende seitliche Begrenzungsfläche 124 begrenzt.

Die Breite b, das heißt die Erstreckung in der Dickenrichtung 116, beträgt für jeden der Hinterschneidungsabschnitte 114 beispielsweise ungefähr 1 mm.

Die Höhe h, das heißt der Abstand zwischen der Grundfläche 120 und der Hinterschneidungsfläche 122, beträgt für jeden der Hinterschneidungsabschnitte 114 beispielsweise ungefähr 2 mm.

Der Basisabschnitt 112 jeder Nut 110 wird durch im Wesentlichen senkrecht zu der jeweiligen Kontaktfläche 106 bzw. 108 verlaufende seitliche Begrenzungswände 126 begrenzt, welche voneinander den Abstand der Nutbreite B aufweisen.

Wie beispielsweise aus Fig. 3 zu ersehen ist, mündet in die Nut 110 des ersten Bauteils 102 eine senkrecht zu einer der seitlichen Begrenzungswände 126 verlaufende, im Wesentlichen zylindrische Zugangsöffnung 128, insbesondere Zugangsbohrung, deren anderes Ende an einer Hauptfläche 129 des ersten Bauteils 102 mündet und so einen Zugang vom Außenraum des ersten Bauteils 102 zu dem Basisabschnitt 112 der Nut 110 ermöglicht.

Um die vorstehend beschriebenen Nuten 110 an den Bauteilen 102 und 104 auszubilden, kann beispielsweise die in der EP 1 990 549 A1 beschriebene Nutfräsvorrichtung verwendet werden.

Zur Verbindung der Bauteile 102, 104 miteinander können in jedem der Bauteile 102, 104 eine oder mehrere Nuten 110, insbesondere Nuten 110 der vorstehend beschriebenen Art, vorgesehen sein.

Es kann jedoch auch vorgesehen sein, dass nur eines der Bauteile 102, 104 mit einer oder mehreren Nuten 110, insbesondere Nuten 110 der vorstehend genannten Art, versehen ist, während das weitere Bauteil 104, 102 keine Nut 110 der vorstehend beschriebenen Art, eine anders ausgebildete Nut 110, eine oder mehrere Bohrungen, eine oder mehrere Vertiefungen, einen oder mehrere Vorsprünge und/oder eine oder mehrere Ausnehmungen umfasst oder unbearbeitet ist.

Verschiedene Ausführungsformen von Verbindungsmitteln 100 zum Verbinden von Bauteilen 102, 104 werden nachfolgend beschrieben.

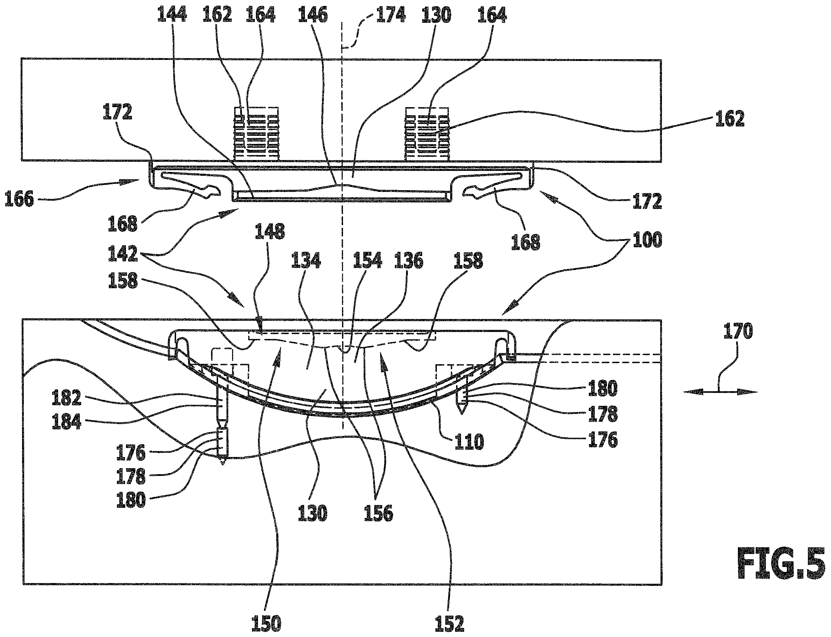

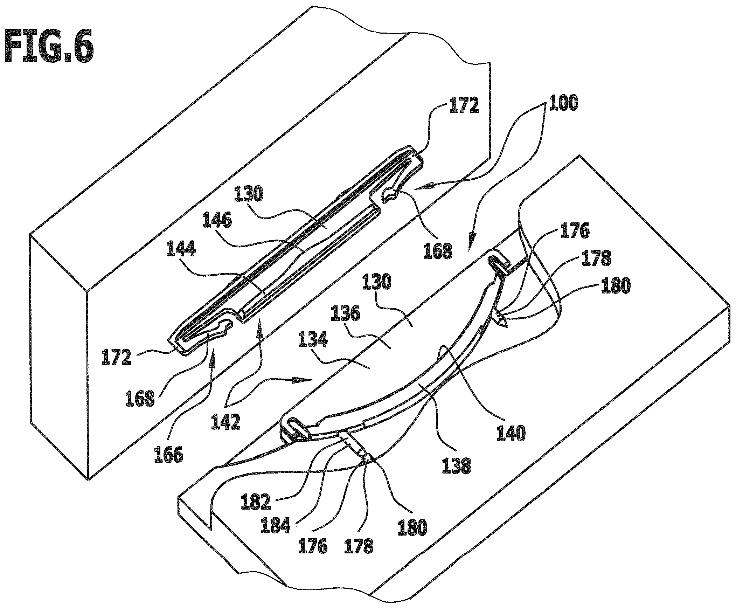

In den Fig. 5 bis 9 ist eine erste Ausführungsform eines Verbindungsmittels 100 dargestellt, welche ein in eine Nut 110 einschiebbares Verbindungselement 130 und ein einsteckbares Verbindungselement 130 umfasst.

Unter einem in eine Nut 110 einschiebbaren Verbindungselement 130 ist vorzugsweise ein Verbindungselement 130 zu verstehen, welches in eine Nut 110 einschiebbar ist, die einen Basisabschnitt 112 und einen oder mehrere sich in einer Dickenrichtung 116 von dem Basisabschnitt 112 weg erstreckende Hinterschneidungsabschnitte 114 umfasst. Der eine Hinterschneidungsabschnitt 114 oder die mehreren Hinterschneidungsabschnitte 114 weisen vorzugsweise eine oder mehrere Hinterschneidungsflächen 122 auf, welche konzentrisch zu dem Basisabschnitt 112 ausgebildet und angeordnet sind. Die Hinterschneidungsfläche 122 oder die Hinterschneidungsflächen 122 sind dabei insbesondere kreiszylindermantelausschnittsförmig ausgebildet.

Ein in eine Nut 110 einschiebbares Verbindungselement 130 umfasst vorzugsweise einen Grundkörper 134, welcher einen dem Basisabschnitt 112 der Nut 110 entsprechenden Basisteil 136 und einen oder mehrere den Hinterschneidungsabschnitten 114 entsprechende Haltevorsprünge 138 umfasst.

Die Haltevorsprünge 138 umfassen jeweils eine gekrümmte Abstützfläche 140, die in einem Längsschnitt kreisbogenförmig ist.

Die Haltevorsprünge 138 sind insbesondere nicht-selbstschneidend ausgebildet.

Unter einem Längsschnitt, einer Längsrichtung, etc. ist in dieser Beschreibung und den beigefügten Ansprüchen ein Schnitt bzw. eine Bewegung des Verbindungselements 130 in einer Ebene zu verstehen, in welcher ein Bewegungspfad des Verbindungselements 130 beim Einschieben desselben in eine Nut 110 liegt.

Ein Längsschnitt ist insbesondere ein senkrecht zu einer Symmetrieachse der Abstützflächen 140 des Verbindungselements 130 genommener Schnitt.

Unter einem Querschnitt ist insbesondere ein senkrecht zu einem Längsschnitt genommener Schnitt zu verstehen, beispielsweise ein senkrecht zu einer Kontaktfläche 106, 108 und parallel zur Symmetrieachse der Abstützflächen 140 des Verbindungselements 130 genommener Schnitt.

Vorzugsweise ist ein Querschnitt ein Schnitt längs einer Ebene, in welcher die Symmetrieachse der Abstützflächen 140 des Verbindungselements 130 verläuft.

Bei der in den Fig. 5 bis 9 dargestellten Ausführungsform des Verbindungsmittels 100 erfolgt die eigentliche Verbindung der zwei Verbindungselemente 130 und der Bauteile 102, 104 miteinander durch eine Führungsvorrichtung 142.

Die Führungsvorrichtung 142 umfasst ein an einem Verbindungselement 130 angeordnetes Führungselement 144, welches einen oder mehrere Führungsvorsprünge 146 umfasst.

Das Führungselement 144 ist insbesondere in eine Führungsnut 148 des weiteren Verbindungselements 130 einbringbar.

Diese Führungsnut 148 umfasst einen Führungsabschnitt 150, welcher von dem Führungselement 144 mittels der Führungsvorsprünge 146 hintergreifbar ist.

Die Führungsvorrichtung 142 umfasst insbesondere eine Kulissenführung 152, welche durch die Führungsnut 148 gebildet ist.

Die Kulissenführung 152 dient insbesondere der Führung des Führungselements 144 längs eines vorgegebenen Führungswegs.

Dieser Führungsweg weist längs der Führungsnut 148 variierende Abstände von den Kontaktflächen 106, 108 der Bauteile 102, 104 auf.

Insbesondere ist bei der Kulissenführung 152 ein lokaler Minimalbereich 154 vorgesehen, welcher von zwei lokalen oder globalen Maximalbereichen 156 umgeben ist.

Die Maximalbereiche 156 sind auf der dem Minimalbereich 154 abgewandten Seite von Auslaufbereichen 158 umgeben.

Zum Verbinden der Verbindungselemente 130 sowie der Bauteile 102, 104 miteinander werden zunächst die Verbindungselemente 130 an den Bauteilen 102, 104 angeordnet.

In einem nächsten Schritt werden die Bauteile 102, 104 zusammen mit den daran angeordneten Verbindungselementen 130 relativ zueinander verschoben, so dass das Führungselement 144 des einen Verbindungselements 130 in die Führungsnut 148 des weiteren Verbindungselements 130 gelangt.

Die Bauteile 102, 104 und die Verbindungselemente 130 werden insbesondere parallel zu den Kontaktflächen 106, 108 der Bauteile 102, 104 verschoben.

Der Führungsvorsprung 146 gelangt zunächst mit einem Auslaufbereich 158 in Eingriff und wird dann über den Maximalbereich 156 hinweg in den Minimalbereich 154 geführt.

Aufgrund des auf diesen Minimalbereich 154 folgenden weiteren Maximalbereichs 156 ist dieser Minimalbereich 154 eine stabile Position für den Führungsvorsprung 146 längs des mittels der Kulissenführung 152 gebildeten Führungswegs.

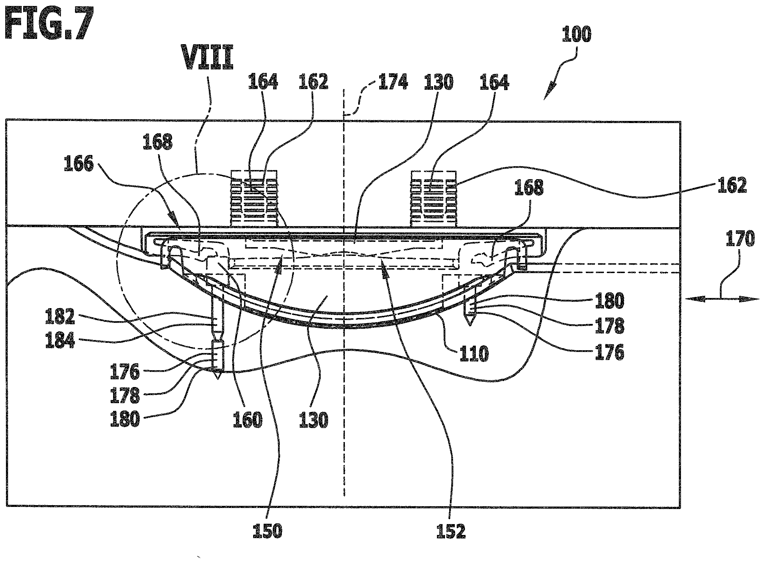

Die Verbindungselemente 130 sind somit stabil miteinander verbunden, wenn der Führungsvorsprung 146 in dem Minimalbereich 154 der Kulissenführung 152 angeordnet ist (siehe insbesondere Fig. 7).

Grundsätzlich kann der Führungsvorsprung 146 zusammen mit dem zugehörigen Verbindungselement 130 und dem zugehörigen Bauteil 102, 104 auch über den weiteren Maximalbereich 156 hinweg sowie aus dem weiteren Auslaufbereich 158 heraus geschoben werden.

Die Verbindungselemente 130 sind somit bei Bedarf vollständig aneinander vorbeischiebbar.

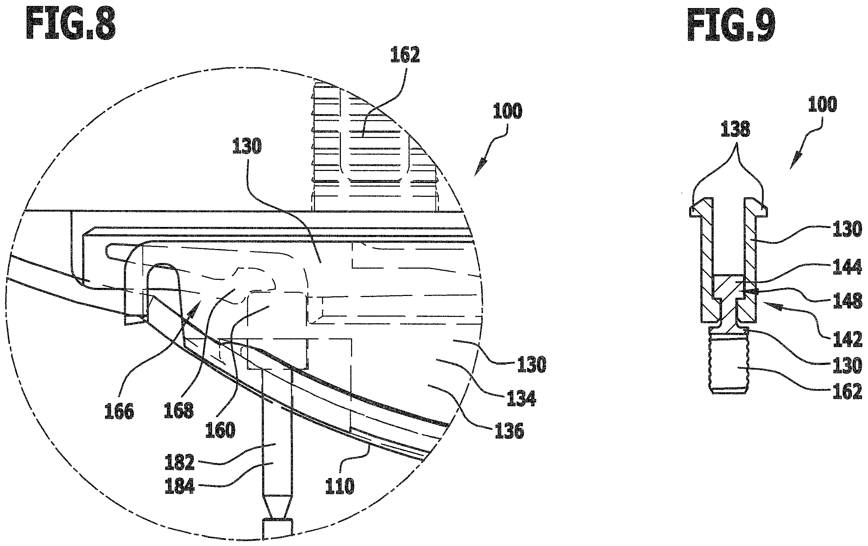

Es kann jedoch auch vorgesehen sein, dass die Verbindungselemente 130 nicht vollständig aneinander vorbeischiebbar sind. Wie insbesondere den Fig. 7 und 8 zu entnehmen ist, kann beispielsweise mittels eines Anschlagelements 160 eine einseitige Begrenzung des Bewegungspfads der Verbindungselemente 130 gebildet werden.

Das Anschlagelement 160 ist bei der in den Fig. 5 bis 9 dargestellten Ausführungsform ein (noch zu beschreibender) Zusatzstift oder Zusatzbolzen.

Zum Festlegen der Verbindungselemente 130 des Verbindungsmittels 100 in den Bauteilen 102, 104 kann beispielsweise jeweils eine Nut 110 gemäß der in den Fig. 1 bis 4 dargestellten Art in den Bauteilen 102, 104 vorgesehen sein. Zumindest abschnittsweise komplementär hierzu ausgebildete Verbindungselemente 130 können dann besonders einfach in die Bauteile 102, 104 eingeschoben und darin festgelegt werden.

Bei der in den Fig. 5 bis 9 dargestellten Ausführungsform des Verbindungsmittels 100 ist hingegen vorgesehen, dass lediglich eines der Verbindungselemente 130 in eine solche Nut 110 einführbar ist.

Das weitere Verbindungselement 130 ist ein einsteckbares Verbindungselement 130, welches beispielsweise zwei Einsteckabschnitte 162 umfasst.

Die Einsteckabschnitte 162 sind beispielsweise im Wesentlichen zylinderförmig, insbesondere im Wesentlichen kreiszylinderförmig, ausgebildet und vorzugsweise mit einer Riffelung, mit Lamellen und/oder mit Halteelementen, insbesondere Widerhaken, versehen.

Die Einsteckabschnitte 162 sind insbesondere in kreiszylindrische Bohrungen 164 in einem der Bauteile 102, 104 einsteckbar, um das einsteckbare Verbindungselement 130 an dem Bauteil 102, 104 festzulegen.

Das einsteckbare Verbindungselement 130 umfasst ferner eine Rastvorrichtung 166 zum Verrasten des Verbindungselements 130 mit dem Anschlagelement 160.

Die Rastvorrichtung 166 umfasst insbesondere zwei Rastarme 168, welche zum Verrasten der Verbindungselemente 130 miteinander beispielsweise an dem Anschlagelement 160 angreifen.

Zum Verrasten der Verbindungselemente 130 und/oder der Bauteile 102, 104 miteinander sind die Bauteile 102, 104 samt der darin angeordneten Verbindungselemente 130 in einer Bewegungsrichtung 170 relativ zueinander bewegbar, insbesondere verschiebbar. Diese Bewegungsrichtung 170 ist insbesondere parallel zu den Kontaktflächen 106, 108 der Bauteile 102, 104 und parallel zur Längsrichtung der Verbindungselemente 130 und/oder der Nut 110 ausgerichtet.

Die Rastarme 168 sind an bezüglich der Bewegungsrichtung 170 einander gegenüberliegend angeordneten Enden 172 des einsteckbaren Verbindungselements 130 angeordnet.

Vorzugsweise sind sowohl das einsteckbare Verbindungselement 130 als auch das in die Nut 110 einschiebbare Verbindungselement 130 zumindest näherungsweise spiegelsymmetrisch bezüglich einer senkrecht zur Bewegungsrichtung 170 ausgerichteten Quermittelachse 174 ausgebildet.

Die Verbindungselemente 130 sind hierdurch universell für eine Vielzahl von Anwendungen geeignet.

Das Verbindungselement 130, welches in eine Nut 110 gemäß der in den Fig. 1 bis 4 dargestellten Art einschiebbar ist, ist grundsätzlich in dieser Nut 110 frei verschiebbar.

Es kann jedoch vorteilhaft sein, das Verbindungselement 130 in der Nut 110 zu fixieren.

Hierzu umfasst das Verbindungsmittel 100 ein oder mehrere Sicherungselemente 176.

Beispielsweise sind zwei Sicherungselemente 176 zum Festlegen des Verbindungselements 130 in der Nut 110 vorgesehen.

Die Sicherungselemente 176 sind beispielsweise als Sicherungsstift 178 oder als Sicherungsbolzen 180 ausgebildet.

Das bereits vorstehend genannte Anschlagelement 160 ist beispielsweise durch einen Zusatzstift 182 oder einen Zusatzbolzen 184 des Verbindungsmittels 100 gebildet.

Die Sicherungselemente 176 sind in einem Ausgangszustand des Verbindungsmittels 100 beispielsweise mit dem Grundkörper 134 verbunden. Mittels einer (nicht dargestellten) Betätigungsvorrichtung sind die Sicherungselemente 176 aus einer Ausgangsstellung in die in den Fig. 5 bis 8 dargestellte Sicherungsstellung bringbar.

Der Zusatzstift 182 oder Zusatzbolzen 184 kann dann insbesondere nach Betätigung des einen oder der mehreren Sicherungselemente 176 an dem Verbindungselement 130 angeordnet werden. Insbesondere kann der Zusatzstift 182 oder Zusatzbolzen 184 in eine Aufnahmevorrichtung (Durchtrittsöffnung) für ein Sicherungselement 176 eingebracht werden, wodurch das Sicherungselement 176 aus einer zunächst vorliegenden Sicherungsstellung in eine weitere (Sicherungs-)Stellung gebracht werden kann (siehe insbesondere Fig. 5 und 7).

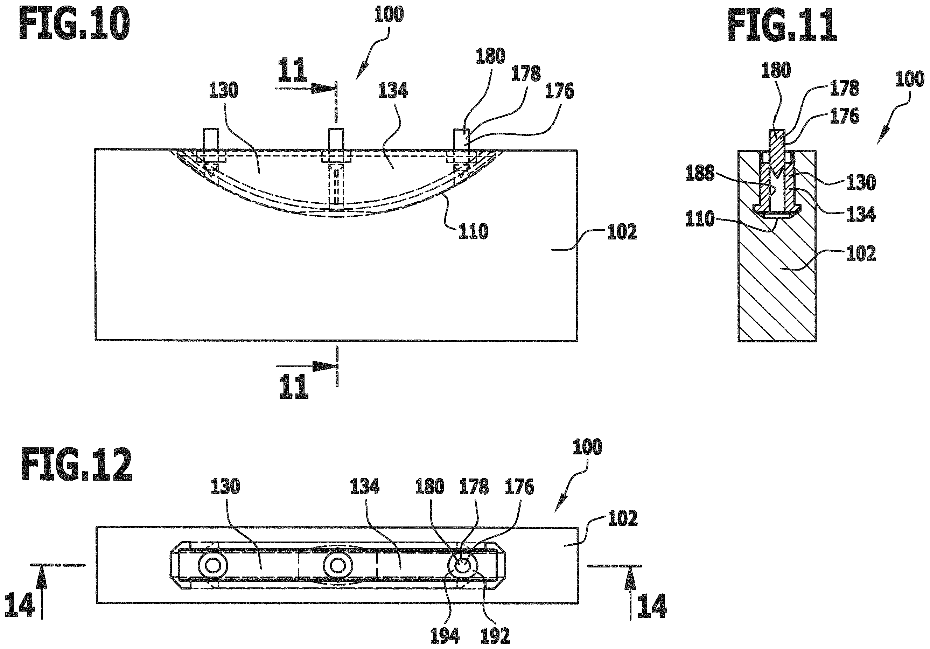

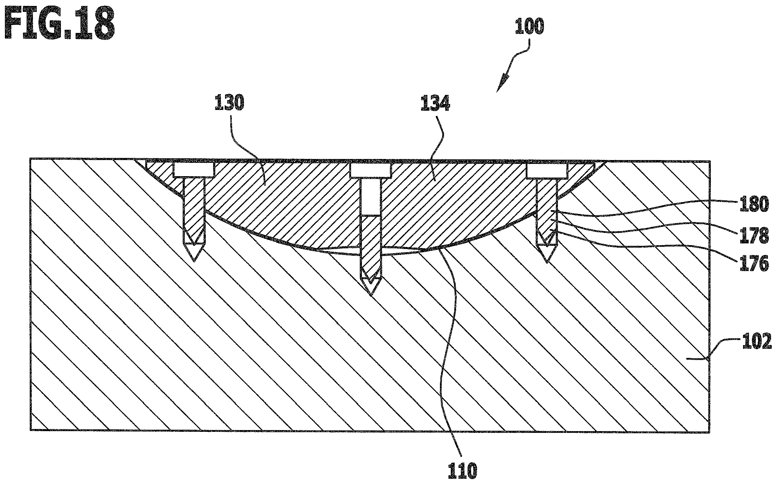

Der genaue Aufbau und die Funktionsweise eines Verbindungselements 130 mit Sicherungselementen 176 wird nachfolgend anhand der in den Fig. 10 bis 18 dargestellten zweiten Ausführungsform eines Verbindungsmittels 100 erläutert. Sämtliche der nachfolgend beschriebenen Merkmale und/oder Vorteile sind vorzugsweise auch bei der in den Fig. 5 bis 9 dargestellten ersten Ausführungsform des Verbindungsmittels 100 verwirklicht.

Das in den Fig. 10 bis 18 dargestellte Verbindungselement 130 eines Verbindungsmittels 100 umfasst zur einfachen Erklärung der Funktionsweise der Sicherungselemente 176 keinen separaten Verbindungsabschnitt zum Verbinden des Verbindungselements 130 mit einem weiteren Verbindungselement 130.

Grundsätzlich kann das Verbindungselement 130 gemäß der in den Fig. 10 bis 18 dargestellten Ausführungsform mit einer beliebigen Vorrichtung zum Verrasten, Verklipsen, Hintergreifen, Klemmen oder sonstigem Verbinden zweier Verbindungselemente 130 versehen sein.

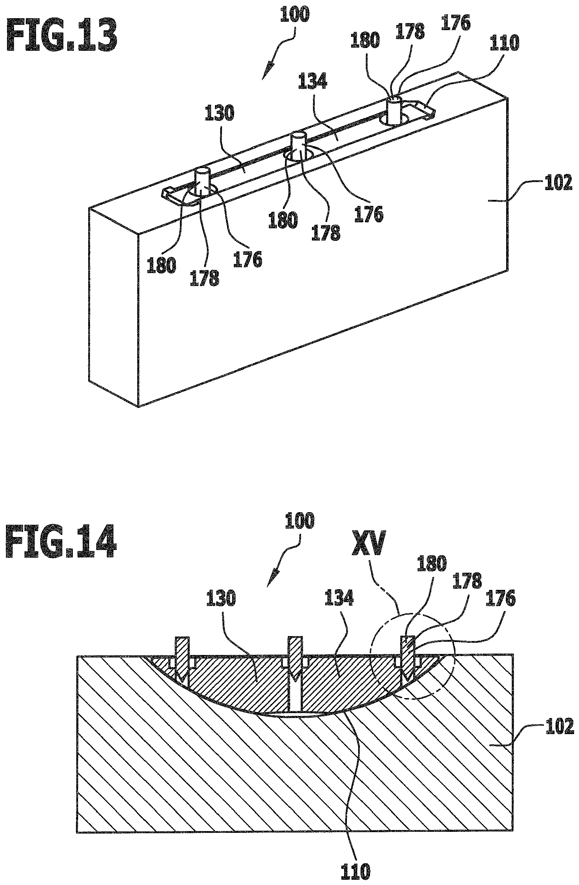

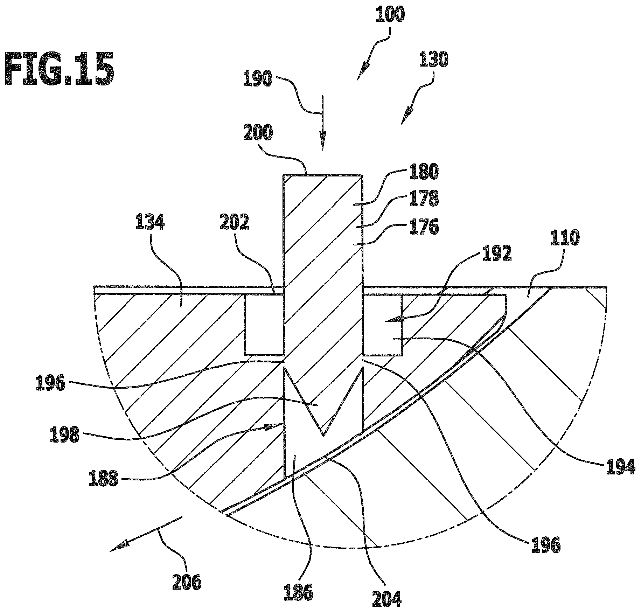

Wie insbesondere den Fig. 14 und 15 zu entnehmen ist, umfasst das Verbindungselement 130 den Grundkörper 134 und ein oder mehrere, beispielsweise zwei oder drei, Sicherungselemente 176.

Der Grundkörper 134 und das eine oder die mehreren Sicherungselemente 176 sind dabei einstückig miteinander ausgebildet.

Insbesondere sind der Grundkörper 134 und das eine oder die mehreren Sicherungselemente 176 als ein einstückiges Spritzgussbauteil ausgebildet.

Der Grundkörper 134 umfasst ein oder mehrere Durchtrittsöffnungen 186, in welchen das eine oder die mehreren Sicherungselemente 176 angeordnet sind.

Sowohl das eine oder die mehreren Sicherungselemente 176 als auch die eine oder die mehreren Durchtrittsöffnungen 186 sind im Wesentlichen kreiszylinderförmig ausgebildet.

Die eine oder die mehreren Durchtrittsöffnungen 186 sind insbesondere zumindest abschnittsweise im Wesentlichen komplementär zu zumindest einem Abschnitt des einen oder der mehreren Sicherungselemente 176 ausgebildet.

Die eine oder die mehreren Durchtrittsöffnungen 186 umfassen somit einen Leitabschnitt 188, mittels welchem das eine oder die mehreren Sicherungselemente 176 geführt oder geleitet werden können. Insbesondere können die Sicherungselemente 176 mittels des jeweiligen Leitabschnitts 188 längs einer Sicherungsrichtung 190 geführt oder geleitet werden.

Die eine oder die mehreren Durchtrittsöffnungen 186 umfassen ferner vorzugsweise jeweils einen Anlageabschnitt 192, an welchem eine (nicht dargestellte) Betätigungsvorrichtung zum Betätigen, insbesondere Bewegen, des einen oder der mehreren Sicherungselemente 176 anlegbar sind.

Ein Anlageabschnitt 192 ist insbesondere als eine ringförmige Vertiefung 194 in dem Grundkörper 134 ausgebildet.

Die ringförmige Vertiefung 194 umgibt insbesondere das Sicherungselement 176.

Ein Bereich, in welchem der Grundkörper 134 und das eine oder die mehreren Sicherungselemente 176 ineinander übergehen, ist ein Sollbruchbereich 196.

Dieser Sollbruchbereich 196 ist insbesondere im Wesentlichen ringförmig ausgebildet und grenzt beispielsweise an den Anlageabschnitt 192 an.

Ein Sicherungselement 176 umfasst beispielsweise ein bezüglich der Sicherungsrichtung 190 vorne angeordnetes spitzes Ende 198.

Ein bezüglich der Sicherungsrichtung 190 hinteres Ende eines Sicherungselements 176 ist insbesondere als ein flaches Ende 200 ausgebildet.

In dem in den Fig. 10 bis 15 dargestellten Ausgangszustand (Ausgangsstellung) des Verbindungselements 130 ragen das eine oder die mehreren Sicherungselemente 176 an einem ersten Ende 202 der Durchtrittsöffnung 186 aus der Durchtrittsöffnung 186 heraus.

Das spitze Ende 198 des einen oder der mehreren Sicherungselemente 176 ist vorzugsweise vollständig in dem Grundkörper 134 angeordnet, insbesondere innerhalb einer Außenkontur des Grundkörpers 134 angeordnet.

Durch Betätigung eines Sicherungselements 176 ist das Sicherungselement 176 längs der Durchtrittsöffnung 186 in der Sicherungsrichtung 190 bewegbar, so dass insbesondere das flache Ende 200 in den Grundkörper 134 hineinbewegt wird, während das spitze Ende 198 aus dem Grundkörper 134 herausbewegt wird.

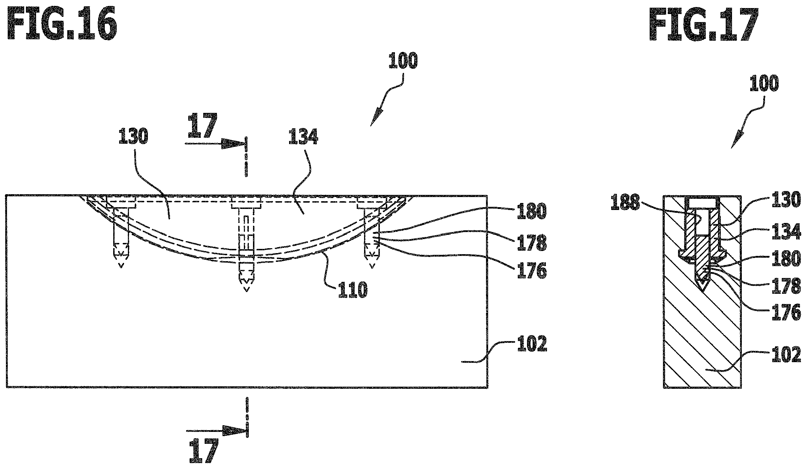

In dieser in den Fig. 16 bis 18 dargestellten Sicherungsstellung des Sicherungselements 176 ragt das Sicherungselement 176 dann an einem dem ersten Ende 202 gegenüberliegenden zweiten Ende 204 der Durchtrittsöffnung 186 aus der Durchtrittsöffnung 186 heraus.

Zum sicheren Festlegen des Verbindungselements 130 in einer Nut 110 ist die Sicherungsrichtung 190 des Sicherungselements 176 quer, beispielsweise schräg oder senkrecht, zu einer Einschubrichtung 206 des Verbindungselements 130 ausgerichtet.

Durch Betätigung des Sicherungselements 176 ist das Verbindungselement 130 somit insbesondere formschlüssig in der Nut 110 festlegbar.

Die vorstehend beschriebene Ausführungsform des Verbindungsmittels 100 und somit die Sicherung eines Verbindungselements 130 in einer Nut 110 funktioniert wie folgt:
Zunächst wird eine Nut 110 gemäß der in den Fig. 1 bis 4 dargestellten Art in ein Bauteil 102 eingebracht.

Zudem wird ein Verbindungselement 130 des Verbindungsmittels 100 bereitgestellt, welches zumindest abschnittsweise eine zu der Nut 110 komplementäre Form aufweist.

Das Verbindungselement 130 ist insbesondere als ein einstückiges Spritzgussbauteil ausgebildet.

Ein oder mehrere Sicherungselemente 176 des Verbindungselements 130 liegen vorzugsweise in der Ausgangsstellung vor und sind dabei einstückig mit dem Grundkörper 134 verbunden.

In der Ausgangsstellung des einen oder der mehreren Sicherungselemente 176 wird das Verbindungselement 130 in der Einschubrichtung 206 in eine Nut 110 eingeschoben, bis der Grundkörper 134 des Verbindungselements 130 in einer vorgegebenen Stellung angeordnet ist.

Zum Verankern des Grundkörpers 134 in dieser Stellung werden als nächstes die Sicherungselemente 176 betätigt.

Hierzu wird die (nicht dargestellte) Betätigungsvorrichtung an dem einen oder den mehreren Anlageabschnitten 192 des Verbindungselements 130 angelegt.

Durch eine Betätigung der Betätigungsvorrichtung, insbesondere durch Aufbringen einer Betätigungskraft, werden dann die Sicherungselemente 176 betätigt.

Die Sicherungselemente 176 werden dabei insbesondere mit einer in der Sicherungsrichtung 190 wirkenden Kraft beaufschlagt, beispielsweise indem mittels der Betätigungsvorrichtung eine Druckkraft auf das flache Ende 200 des jeweiligen Sicherungselements 176 ausgeübt wird.

Aufgrund dieser Krafteinwirkung wird der Sollbruchbereich 196 zwischen dem Grundkörper 134 und dem jeweiligen Sicherungselement 176 zerstört.

Das eine oder die mehreren Sicherungselemente 176 werden somit von dem Grundkörper 134 gelöst und daraufhin in der Sicherungsrichtung 190 bewegt.

Mittels des Leitabschnitts 188 wird gewährleistet, dass die Sicherungselemente 176 in der vorgegebenen Sicherungsrichtung 190 bewegt werden.

Wie insbesondere den Fig. 16 bis 18 zu entnehmen ist, werden die Sicherungselemente 176 dabei insbesondere in das Bauteil 102 hineingerammt.

Vorzugsweise werden die Sicherungselemente 176 soweit bewegt, dass die Sicherungselemente 176 teilweise in dem Grundkörper 134 und teilweise in dem Bauteil 102 angeordnet sind.

Die Sicherungselemente 176 erzeugen dadurch eine Verriegelung des Grundkörpers 134 bezüglich der Einschubrichtung 206, um den Grundkörper 134 letztlich in der gewünschten Stellung in der Nut 110 festzulegen.

Beispielsweise mittels eines Zusatzstifts 182 oder eines Zusatzbolzens 184 (siehe insbesondere Fig. 5 und 7) kann eine zusätzliche Betätigung eines oder mehrere Sicherungselemente 176 erfolgen.

Insbesondere kann ein solcher Zusatzstift 182 oder Zusatzbolzen 184 dazu verwendet werden, das Sicherungselement 176 vollständig aus dem Grundkörper 134 heraus- und in das Bauteil 102 hineinzubewegen.

Mittels eines solchen Zusatzstifts 182 oder eines solchen Zusatzbolzens 184 kann beispielsweise eine (noch) stärkere Verankerung des Verbindungselements 130 in der Nut 110 realisiert werden. Alternativ oder ergänzend hierzu kann mittels eines solchen Zusatzstifts 182 oder eines solchen Zusatzbolzens 184 ein zusätzliches funktionales Bauteil, beispielsweise ein Anschlagelement 160, an dem Verbindungselement 130 angeordnet werden.

Wie bereits vorstehend ausgeführt, dienen die Fig. 10 bis 18 primär der Illustration der Funktionsweise der Sicherungselemente 176.

Insbesondere mit Hinblick auf die übrige Form und Funktion des Grundkörpers 134 zur Festlegung desselben in einer Nut 110 stimmt die in den Fig. 10 bis 18 dargestellte Ausführungsform mit der in den Fig. 5 bis 9 dargestellten Ausführungsform überein, so dass auf deren vorstehende Beschreibung insoweit Bezug genommen wird.

Dadurch, dass das Verbindungsmittel 100 vorzugsweise einen Grundkörper 134 und ein oder mehrere einstückig mit dem Grundkörper 134 ausgebildete Sicherungselemente 176 umfasst, ist ein einfach handzuhabendes und zuverlässig festzulegendes Verbindungselement 130 des Verbindungsmittels 100 bereitstellbar.

### Bezugszeichenliste

- 100: Verbindungsmittel
- 102: Bauteil
- 104: Bauteil
- 106: Kontaktfläche
- 108: Kontaktfläche
- 110: Nut
- 112: Basisabschnitt
- 114: Hinterschneidungsabschnitt
- 116: Dickenrichtung
- 118: Nutgrundfläche
- 120: Grundfläche
- 122: Hinterschneidungsfläche
- 124: seitliche Begrenzungsfläche
- 126: seitliche Begrenzungswand
- 128: Zugangsöffnung
- 129: Hauptfläche
- 130: Verbindungselement
- 134: Grundkörper
- 136: Basisteil
- 138: Haltevorsprung
- 140: Abstützfläche
- 142: Führungsvorrichtung
- 144: Führungselement
- 146: Führungsvorsprung
- 148: Führungsnut
- 150: Führungsabschnitt
- 152: Kulissenführung
- 154: Minimalbereich
- 156: Maximalbereich
- 158: Auslaufbereich
- 160: Anschlagelement
- 162: Einsteckabschnitt
- 164: Bohrung
- 166: Rastvorrichtung
- 168: Rastarm
- 170: Bewegungsrichtung
- 172: Ende
- 174: Quermittelachse
- 176: Sicherungselement
- 178: Sicherungsstift
- 180: Sicherungsbolzen
- 182: Zusatzstift
- 184: Zusatzbolzen
- 186: Durchtrittsöffnung
- 188: Leitabschnitt
- 190: Sicherungsrichtung
- 192: Anlageabschnitt
- 194: ringförmige Vertiefung
- 196: Sollbruchbereich
- 198: spitzes Ende
- 200: flaches Ende
- 202: erstes Ende
- 204: zweites Ende
- 206: Einschubrichtung

- B: Nutbreite
- T: Nuttiefe

- b: Breite
- h: Höhe

## Patentansprüche

1. Verbindungsmittel (100) zum Festlegen und/oder Verbinden von Bauteilen (102, 104) oder Gegenständen,
wobei mindestens ein Verbindungselement (130) des Verbindungsmittels (100) in oder an einem Bauteil (102, 104) festlegbar ist und Folgendes umfasst:
einen Grundkörper (134) und ein oder mehrere Sicherungselemente (176),
wobei das eine oder die mehreren Sicherungselemente (176) in einer Ausgangsstellung des Verbindungsmittels (100) einstückig mit dem Grundkörper (134) ausgebildet sind,
wobei das eine oder die mehreren Sicherungselemente (176) durch Zerstören eines Sollbruchbereichs (196) zwischen dem Grundkörper (134) und dem einen oder den mehreren Sicherungselementen (176) von dem Grundkörper (134) lösbar sind und
wobei das eine oder die mehreren Sicherungselemente (176) zum Festlegen des Grundkörpers (134) in oder an dem Bauteil (102, 104) aus der Ausgangsstellung in eine Sicherungsstellung bringbar sind, **dadurch gekennzeichnet, dass** das eine oder die mehreren Sicherungselemente (176) in der Ausgangsstellung einerseits und in der Sicherungsstellung andererseits in voneinander verschiedenen Richtungen aus einer oder mehreren Durchtrittsöffnungen (186) des Grundkörpers (134) herausragen.

2. Verbindungsmittel (100) nach Anspruch 1, **dadurch gekennzeichnet, dass** das mindestens eine Verbindungselement (130) ein oder mehrere als Sicherungsstift (178) oder Sicherungsbolzen (180) ausgebildete Sicherungselemente (176) umfasst.

3. Verbindungsmittel (100) nach einem der Ansprüche 1 oder 2, **dadurch gekennzeichnet, dass** der Grundkörper (134) einen Leitabschnitt (188) umfasst, mittels welchem und/oder längs welchem das eine oder die mehreren Sicherungselemente (176) aus der Ausgangsstellung in die Sicherungsstellung führbar oder leitbar sind,
wobei der Leitabschnitt (188) vorzugsweise durch ein oder mehrere Durchtrittsöffnungen (186) in dem Grundkörper (134) gebildet ist, innerhalb derer das eine oder die mehreren Sicherungselemente (176) geführt oder geleitet sind.

4. Verbindungsmittel (100) nach einem der Ansprüche 1 bis 3, **dadurch gekennzeichnet, dass** der Sollbruchbereich (196) zwischen dem Grundkörper (134) und dem einen oder den mehreren Sicherungselementen (176) vertieft in dem Grundkörper (134) angeordnet ist.

5. Verbindungsmittel (100) nach einem der Ansprüche 1 bis 4, **dadurch gekennzeichnet, dass** der Grundkörper (134) und das eine oder die mehreren Sicherungselemente (176) in der Ausgangsstellung des einen oder der mehreren Sicherungselemente (176) als ein einstückig ausgebildetes Spritzgussbauteil ausgebildet sind.

6. Verbindungsmittel (100) nach einem der Ansprüche 1 bis 5, **dadurch gekennzeichnet, dass** der Grundkörper (134) einen Anlageabschnitt (192) umfasst, an welchen eine Betätigungsvorrichtung anlegbar ist, mittels welcher das eine oder die mehreren Sicherungselemente (176) von der Ausgangsstellung in die Sicherungsstellung bringbar sind, wobei der Anlageabschnitt (192) vorzugsweise eine oder mehrere ringförmige Vertiefungen (194) umfasst, welche insbesondere konzentrisch und/oder koaxial um das eine oder die mehreren Sicherungselemente (176) angeordnet sind.

7. Verbindungsmittel (100) nach einem der Ansprüche 1 bis 6, **dadurch gekennzeichnet, dass** der Grundkörper (134) in einer Einschubrichtung (206) in eine Nut (110) einschiebbar ist, welche in oder an dem Bauteil (102, 104) vorgesehen ist,
wobei das eine oder die mehreren Sicherungselemente (176) zur Festlegung derselben in der Sicherungsstellung vorzugsweise quer, insbesondere schräg oder senkrecht, zur Einschubrichtung (206) bewegbar sind.

8. Verbindungsmittel (100) nach einem der Ansprüche 1 bis 7, **dadurch gekennzeichnet, dass** der Grundkörper (134) eine gekrümmte Anlagefläche umfasst, welche in einem Längsschnitt kreisbogenförmig ist.

9. Verbindungsmittel (100) nach einem der Ansprüche 1 bis 8, **dadurch gekennzeichnet, dass** der Grundkörper (134) einen oder mehrere nichtselbstschneidende Haltevorsprünge (138) umfasst,
wobei der eine oder die mehreren nicht-selbstschneidenden Haltevorsprünge (138) vorzugsweise jeweils eine gekrümmte Abstützfläche (140) aufweisen, die in einem Längsschnitt kreisbogenförmig ist.

10. Verbindungsmittel (100) nach einem der Ansprüche 1 bis 9, **dadurch gekennzeichnet, dass** mindestens ein Verbindungselement (130) im Wesentlichen vollständig in einer Nut (110) des Bauteils (102, 104) anordenbar ist, so dass das mindestens eine Verbindungselement (130) nicht über eine Kontaktfläche (106, 108) des Bauteils (102, 104) hinausragt.

11. Verbindungsmittel (100) nach einem der Ansprüche 1 bis 10, **dadurch gekennzeichnet, dass** der Grundkörper (134) einen Verbindungsabschnitt zum Verbinden des Verbindungselements (130) mit einem weiteren Verbindungselement (130) und/oder einem Gegenstand umfasst.

12. Verfahren zum Festlegen eines Verbindungselements (130) eines Verbindungsmittels (100) an oder in einem Bauteil (102, 104), umfassend Folgendes:
- Bereitstellen eines Verbindungselements (130) eines Verbindungsmittels (100), welches einen Grundkörper (134) und ein oder mehrere Sicherungselemente (176) umfasst, wobei das eine oder die mehreren Sicherungselemente (176) in einer Ausgangsstellung des Verbindungsmittels (100) vorliegen und dabei einstückig mit dem Grundkörper (134) ausgebildet sind;
- Anordnen des Verbindungselements (130) an oder in einem Bauteil (102, 104);
- Zerstören eines Sollbruchbereichs (196) zwischen dem Grundkörper (134) und dem einen oder den mehreren Sicherungselementen (176) zum Lösen des einen oder der mehreren Sicherungselemente (176) von dem Grundkörper (134);
- Bewegen des einen oder der mehreren Sicherungselemente (176) aus der Ausgangsstellung in eine Sicherungsstellung zum Festlegen des Grundkörpers (134) des Verbindungselements (130) an oder in dem Bauteil (102, 104),
**dadurch gekennzeichnet, dass** das eine oder die mehreren Sicherungselemente (176) in der Ausgangsstellung einerseits und in der Sicherungsstellung andererseits in voneinander verschiedenen Richtungen aus einer oder mehreren Durchtrittsöffnungen (186) des Grundkörpers (134) herausragen.

13. Verfahren nach Anspruch 12, **dadurch gekennzeichnet, dass** der Grundkörper (134) und das eine oder die mehreren Sicherungselemente (176) des Verbindungselements (130) einstückig miteinander in einem Spritzgussverfahren, insbesondere einem Kunststoff-Spritzgussverfahren, hergestellt werden.

14. Verfahren nach einem der Ansprüche 12 oder 13, **dadurch gekennzeichnet, dass** durch eine einzige Betätigung des einen oder der mehreren Sicherungselemente (176), insbesondere durch Aufbringen einer in einer Sicherungsrichtung (190) gerichteten Betätigungskraft, der Sollbruchbereich (196) zerstört und das eine oder die mehreren Sicherungselemente (176) aus der Ausgangsstellung in die Sicherungsstellung bewegt werden.

## Claims

1. Connecting device (100) for fixing and/or connecting components (102, 104) or objects,
wherein at least one connecting element (130) of the connecting device (100) is fixable in or to a component (102, 104) and comprises the following:
a main body (134) and one or more securing elements (176),
wherein the one or the plurality of securing elements (176) are formed in one piece with the main body (134) in an initial position of the connecting device (100),
wherein the one or the plurality of securing elements (176) are detachable from the main body (134) by destroying a predetermined break-away region (196) between the main body (134) and the one or the plurality of securing elements (176) and
wherein the one or the plurality of securing elements (176) are moveable from the initial position into a securing position for the purposes of fixing the main body (134) in or to the component (102, 104),
**characterized in that** the one or the plurality of securing elements (176) project out of one or more through openings (186) of the main body (134) in mutually different directions in the initial position on the one hand and in the securing position on the other.

2. A connecting device (100) in accordance with Claim 1, **characterized in that** the at least one connecting element (130) comprises one or more securing elements (176) in the form of locking pins (178) or security bolts (180).

3. A connecting device (100) in accordance with either of the Claims 1 or 2, **characterized in that** the main body (134) comprises a guide section (188) by means of which and/or along which the one or the plurality of securing elements (176) are guidable or conveyable from the initial position into the securing position, wherein the guide section (188) is preferably formed by one or more through openings (186) in the main body (134) within which the one or the plurality of securing elements (176) are guided or led.

4. A connecting device (100) in accordance with any of the Claims 1 to 3, **characterized in that** the predetermined break-away region (196) between the main body (134) and the one or the plurality of securing elements (176) is recessed in the main body (134).

5. A connecting device (100) in accordance with any of the Claims 1 to 4, **characterized in that** the main body (134) and the one or the plurality of securing elements (176) are in the form of a one piece injection moulded component in the initial position of the one or the plurality of securing elements (176).

6. A connecting device (100) in accordance with any of the Claims 1 to 5, **characterized in that** the main body (134) comprises a bearing section (192) upon which there is placeable an operating device by means of which the one or the plurality of securing elements (176) are moveable from the initial position into the securing position, wherein the bearing section (192) preferably comprises one or more annular recesses (194) which are arranged, in particular, concentrically and/or coaxially around the one or the plurality of securing elements (176).

7. A connecting device (100) in accordance with any of the Claims 1 to 6, **characterized in that** the main body (134) is insertible in a direction of insertion (206) into a groove (110) which is provided in or on the component (102, 104), wherein the one or the plurality of securing elements (176) are movable preferably transversely and in particular at an angle or perpendicularly to the direction of insertion (206) for the purposes of fixing said elements in the securing position.

8. A connecting device (100) in accordance with any of the Claims 1 to 7, **characterized in that** the main body (134) comprises a curved bearing surface which is in the form of an arc of a circle in a longitudinal section.

9. A connecting device (100) in accordance with any of the Claims 1 to 8, **characterized in that** the main body (134) comprises one or more non-self-cutting retaining projections (138), wherein the one or the plurality of non-self-cutting retaining projections (138) preferably each have a curved supporting surface (140) which is in the form of an arc of a circle in a longitudinal section.

10. A connecting device (100) in accordance with any of the Claims 1 to 9, **characterized in that** at least one connecting element (130) is arrangeable substantially entirely in a groove (110) of the component (102, 104) so that the at least one connecting element (130) does not project beyond a contact surface (106, 108) of the component (102, 104).

11. A connecting device (100) in accordance with any of the Claims 1 to 10, **characterized in that** the main body (134) comprises a connecting section for connecting the connecting element (130) to a further connecting element (130) and/or to an object.

12. Method of fixing a connecting element (130) of a connecting device (100) to or in a component (102, 104) comprising the following:
- providing a connecting element (130) of a connecting device (100) which comprises a main body (134) and one or more securing elements (176), wherein the one or the plurality of securing elements (176) are provided and are formed in one piece with the main body (134) in an initial position of the connecting device (100);
- arranging the connecting element (130) on or in a component (102, 104);
- destroying a predetermined break-away region (196) between the main body (134) and the one or the plurality of securing elements (176) for the purposes of detaching the one or the plurality of securing elements (176) from the main body (134);
- moving the one or the plurality of securing elements (176) from the initial position into a securing position for the purposes of fixing the main body (134) of the connecting element (130) to or in the component (102, 104), **characterized in that** the one or the plurality of securing elements (176) project out of one or more through openings (186) of the main body (134) in mutually different directions in the initial position on the one hand and in the securing position on the other.

13. A method in accordance with Claim 12, **characterized in that** the main body (134) and the one or the plurality of securing elements (176) of the connecting element (130) are manufactured in one piece with one another in an injection moulding process, in particular a plastics material injection moulding process.

14. A method in accordance with either of the Claims 12 or 13, **characterized in that** the predetermined break-away region (196) is destroyed and the one or the plurality of securing elements (176) are moved from the initial position into the securing position by a single actuation of the one or the plurality of securing elements (176), in particular by applying an actuating force directed in a securing direction (190).

## Revendications

1. Moyen de liaison (100) pour la fixation et/ou la liaison de pièces structurales (102, 104) ou d'objets,
dans lequel au moins un élément de liaison (130) du moyen de liaison (100) peut être fixé dans ou sur une pièce structurale (102, 104) et comprend ce qui suit :
un corps de base (134) et un ou plusieurs éléments de blocage (176),
dans lequel le ou les plusieurs éléments de blocage (176) sont réalisés d'un seul tenant avec le corps de base (134) dans une position de départ du moyen de liaison (100),
dans lequel le ou les plusieurs éléments de blocage (176) peuvent être libérés du corps de base (134) par destruction d'une zone de rupture (196) entre le corps de base (134) et le ou les plusieurs éléments de blocage (176) et
dans lequel le ou les plusieurs éléments de blocage (176) peuvent être amenés de la position de départ à une position de blocage pour la fixation du corps de base (134) dans ou sur la pièce structurale (102, 104),
**caractérisé en ce que** le ou les plusieurs éléments de blocage (176) dans la position de départ d'une part et dans la position de blocage d'autre part font saillie d'une ou de plusieurs ouvertures de passage (186) du corps de base (134) dans des directions différentes les unes des autres.

2. Moyen de liaison (100) selon la revendication 1, **caractérisé en ce que** l'au moins un élément de liaison (130) comprend un ou plusieurs éléments de blocage (176) réalisés en tant que tige de blocage (178) ou boulon de blocage (180).

3. Moyen de liaison (100) selon l'une quelconque des revendications 1 ou 2, **caractérisé en ce que** le corps de base (134) comprend une section de guidage (188), au moyen de laquelle et/ou le long de laquelle le ou les plusieurs éléments de blocage (176) peuvent être dirigés ou guidés de la position de départ à la position de blocage,
dans lequel la section de guidage (188) est formée de préférence par une ou plusieurs ouvertures de passage (186) dans le corps de base (134), à l'intérieur desquelles le ou les plusieurs éléments de blocage (176) sont dirigés ou guidés.

4. Moyen de liaison (100) selon l'une quelconque des revendications 1 à 3, **caractérisé en ce que** la zone de rupture (196) est agencée entre le corps de base (134) et le ou les plusieurs éléments de blocage (176), enfoncée dans le corps de base (134).

5. Moyen de liaison (100) selon l'une quelconque des revendications 1 à 4, **caractérisé en ce que** le corps de base (134) et le ou les plusieurs éléments de blocage (176) sont réalisés dans la position de départ des un ou plusieurs éléments de blocage (176) en tant que pièce structurale moulée par injection réalisée d'un seul tenant.

6. Moyen de liaison (100) selon l'une quelconque des revendications 1 à 5, **caractérisé en ce que** le corps de base (134) comprend une section d'appui (192), contre laquelle un dispositif d'actionnement peut être appuyé, au moyen duquel le ou les plusieurs éléments de blocage (176) peuvent être amenés de la position de départ à la position de blocage, dans lequel la section d'appui (192) comprend de préférence un ou plusieurs évidements annulaires (194), lesquels sont agencés en particulier de manière concentrique et/ou coaxiale autour des un ou plusieurs éléments de blocage (176).

7. Moyen de liaison (100) selon l'une quelconque des revendications 1 à 6, **caractérisé en ce que** le corps de base (134) peut être inséré dans une direction d'insertion (206) dans une rainure (110), laquelle est prévue dans ou sur la pièce structurale (102, 104),
dans lequel le ou les plusieurs éléments de blocage (176) sont mobiles pour leur fixation dans la position de blocage, de préférence transversalement, de préférence en biais ou perpendiculairement, à la direction d'insertion (206).

8. Moyen de liaison (100) selon l'une quelconque des revendications 1 à 7, **caractérisé en ce que** le corps de base (134) comprend une surface d'appui incurvée, laquelle est en forme d'arc de cercle dans une coupe longitudinale.

9. Moyen de liaison (100) selon l'une quelconque des revendications 1 à 8, **caractérisé en ce que** le corps de base (134) comprend une ou plusieurs saillies de retenue non auto-taraudeuses (138),
dans lequel les une ou plusieurs saillies de retenue non auto-taraudeuses (138) présentent de préférence respectivement une surface de support incurvée (140), qui est en forme d'arc de cercle dans une coupe longitudinale.

10. Moyen de liaison (100) selon l'une quelconque des revendications 1 à 9, **caractérisé en ce qu'**au moins un élément de liaison (130) peut être agencé sensiblement entièrement dans une rainure (110) de la pièce structurale (102, 104), de sorte que l'au moins un élément de liaison (130) ne fasse pas saillie d'une surface de contact (106, 108) de la pièce structurale (102, 104).

11. Moyen de liaison (100) selon l'une quelconque des revendications 1 à 10, **caractérisé en ce que** le corps de base (134) comprend une section de liaison pour la liaison de l'élément de liaison (130) avec un autre élément de liaison (130) et/ou un objet.

12. Procédé pour la fixation d'un élément de liaison (130) d'un moyen de liaison (100) sur ou dans une pièce structurale (102, 104), comprenant ce qui suit :
- mise à disposition d'un élément de liaison (130) d'un moyen de liaison (100), lequel comprend un corps de base (134) et un ou plusieurs éléments de blocage (176), dans lequel le ou les plusieurs éléments de blocage (176) sont présents dans une position de départ du moyen de liaison (100) et sont réalisés pour cela d'un seul tenant avec le corps de base (134) ;
- agencement de l'élément de liaison (130) sur ou dans une pièce structurale (102, 104) ;
- destruction d'une zone de rupture (196) entre le corps de base (134) et le ou les plusieurs éléments de blocage (176) pour libérer le ou les plusieurs éléments de blocage (176) du corps de base (134) ;
- déplacement des un ou plusieurs éléments de blocage (176) de la position de départ à une position de blocage pour la fixation du corps de base (134) de l'élément de liaison (130) sur ou dans la pièce structurale (102, 104),
**caractérisé en ce que** le ou les plusieurs éléments de blocage (176) dans la position de départ d'une part et dans la position de blocage d'autre part font saillie d'une ou de plusieurs ouvertures de passage (186) du corps de base (134) dans des directions différentes les unes des autres.

13. Procédé selon la revendication 12, **caractérisé en ce que** le corps de base (134) et le ou les plusieurs éléments de blocage (176) de l'élément de liaison (130) sont fabriqués d'un seul tenant l'un avec l'autre dans un procédé de moulage par injection, en particulier un procédé de moulage par injection de plastique.

14. Procédé selon l'une quelconque des revendications 12 ou 13, **caractérisé en ce que** par un seul actionnement des un ou plusieurs éléments de blocage (176), en particulier par application d'une force d'actionnement dirigée dans une direction de blocage (190), la zone de rupture (196) est détruite et le ou les plusieurs éléments de blocage (176) sont déplacés de la position de départ à la position de blocage.
